(19) **Europäisches Patentamt**

**European Patent Office**

**Office européen des brevets**

(11) **EP 0 711 978 B1**

(12) **EUROPÄISCHE PATENTSCHRIFT**

(45) Veröffentlichungstag und Bekanntmachung des Hinweises auf die Patenterteilung:
**10.05.2000 Patentblatt 2000/19**

(51) Int. Cl.⁷: **G01D 5/241**, G01D 5/165

(21) Anmeldenummer: **95100852.3**

(22) Anmeldetag: **23.01.1995**

(54) **Verfahren und Vorrichtung zur Bestimmung einer jeweiligen örtlichen Position eines Körpers durch kapazitive Abtastung**

Method and apparatus for determining the current position of a body by capacitive scanning

Procédé et dispositif pour déterminer la position réelle d'un objet par balayage capacitif

(84) Benannte Vertragsstaaten:
**AT BE CH DE DK ES FR GB GR IT LI NL PT SE**

(30) Priorität: **10.11.1994 DE 4440067**
**30.12.1994 DE 4447295**

(43) Veröffentlichungstag der Anmeldung:
**15.05.1996 Patentblatt 1996/20**

(73) Patentinhaber:
HORST SIEDLE GmbH & Co. KG.
78120 Furtwangen (DE)

(72) Erfinder:
- **Gleixner, Franz**
  **D-85244 Röhrmoos (DE)**
- **Utz, Rainer, Dr.**
  **D-73760 Ostfildern (DE)**
- **Bächle, Dieter**
  **D-71090 Weil im Schönbuch (DE)**

(74) Vertreter:
**Otte, Peter, Dipl.-Ing.**
**Otte & Jakelski**
**Patentanwälte,**
**Mollenbachstrasse 37**
**71229 Leonberg (DE)**

(56) Entgegenhaltungen:
**WO-A-94/11888**  **US-A- 4 290 065**
**US-A- 5 049 827**

- **PROCEEDINGS OF THE INSTRUMENTATION AND MEASUREMENT TECHNOLOGY CONFERENCE, ADVANCED TECHNOLOGIES IN I & M HAMAMATSU, MAY 10 - 12, 1994, Bd. 1, 10.Mai 1994, INSTITUTE OF ELECTRICAL AND ELECTRONICS ENGINEERS, Seiten 308-311, XP000507308 LI X J ET AL: "A NOVEL SMART RESISTIVE-CAPACITIVE ANGULAR PSD"**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

**Stand der Technik**

Die Erfindung betrifft ein Verfahren nach dem Oberbegriff des Anspruchs 1 bzw. des Anspruchs 2 sowie eine Vorrichtung nach dem Oberbegriff des Anspruchs 4 und bezieht sich allgemein auf Auswerteschaltungen in Verbindung mit eine kapazitive Abtastung bei Weg-, Winkel- oder Positions-Gebern ermöglichenden peripheren Schaltungen, so daß sich die Positionen von bewegbaren Körpern berührungs- und störgrößenfrei erfassen lassen.

Hierfür werden bekannterweise in den meisten Fällen Spannungsteilerschaltungen in Analogtechnik eingesetzt, die entweder nach dem Potentiometerprinzip als Weggeber, Stellwiderstände oder Potentiometer ausgebildet sind oder auch in Form von Induktivitäten, beispielsweise als Differentialspulen, Differentialtransformatoren, Induktivität mit Kurzschlußwicklungen in Form eines Rohres, eingesetzt werden.

Bei einem analogen Widerstandspotentiometer dient ein aufgespritzter oder auch aufgedampfter Niederschlag auf einem Substrat als Widerstandsbahn, auf welcher ein Schleifer in Kontaktberührung gleitet, so daß dieser in die Lage versetzt wird, je nach seiner Position unterschiedliche Gleichspannungspotentiale der Widerstandsbahn abzugreifen und üblicherweise über eine direkt mit ihm verbundenen Kollektorschleifer auf eine Kollektorbahn zu übertragen, an welcher das abgegriffene Potential zur Auswertung verfügbar ist. Solche Potentiometer, die in bestimmten Ausführungsformen mit sehr hoher Präzision als Weg- oder Meßwertgeber eingesetzt werden können, können unter bestimmten Bedingungen aufgrund der ständigen Kontaktgabe, die letztlich auch zu Abnutzungen bei schnellen Schleiferbewegungen führt, Probleme aufweisen, die eine berührungslose Erfassung entsprechender Meßwerte erstrebenswert machen.

Wird anstelle der ebenfalls berührungslos arbeitenden, jedoch eine gewisse Meßungenauigkeit und unter Umständen auch Nichtlinearitäten aufweisenden induktiven Meßsystemen ein kapazitiver Positionssensor oder Wegaufnehmer eingesetzt, wie er beispielsweise aus der DE 28 26 398 C2 bekannt ist, dann muß mit unter Umständen durchaus erheblichen Verfälschungen des gewonnenen Meßwertes durch den Einfluß von Streukapazitäten und Ableitwiderständen gerechnet werden, die zumeist nicht hinnehmbar sind.

Der kapazitive Wegaufnehmer der DE 28 26 398 C2 besteht aus einem Paar schräg unterteilter, gegeneinander isolierter Kondensatorplatten, an denen eine Wechselspannung anliegt und wobei eine als Abgriff dienende, zwischen diesen Kondensatorplatten um den abzugreifenden Weg verstellbare Zwischenplatte über ein Verbindungskabel mit dem Eingang einer Auswerteschaltung verbunden ist. Durch die Bewegungen des Abgriffs ergeben sich auf das Verbindungskabel und dessen Anschlußpunkte ständig sich verändernde Kräfte, die nicht nur eine beschleunigte Alterung des Wegaufnehmers bewirken, sondern gerade durch die Lage- und Wegänderungen des Kabels gleichzeitig zu Kapazitätsänderungen und sich ändernden Streukapazitäten sowie veränderlichen Ableitwiderständen führen, die eine nicht definierbare und vor allen Dingen auf diese Weise auch nicht zu kompensierende Störgröße bedeuten.

Die Auswerteschaltung umfaßt bei diesem bekannten Weggeber einen Operationsverstärker, dessen einer Eingang über das Verbindungskabel mit der verschiebbaren Zwischenplatte, die als Abgriff dient, verbunden ist und dessen anderer Eingang über einen an Masse geschalteten Widerstand mit dem rückgeführten Meßwertsignal beaufschlagt ist. Der Ausgangsanschluß des Operationsverstärkers liegt über einen Gleichrichter an weiteren Verstärkungselementen, von denen einer als Emitterfolger geschaltet ist. Da bei einer solchen Auswerteschaltung die auftretenden Streukapazitäten in der Größenordnung der Meßkapazität liegen und der Eingangswiderstand des Verstärkers bei üblichen Frequenzen im Bereich der Impedanz des Sensors, ist eine genaue und streng lineare Ausgangsspannung nicht zu erwarten.

Weitere bekannte kapazitive Weggeber oder Positionsgeber sind bekannt aus den Veröffentlichungen US-A-4 290 065, WO-A-94 11 888 bzw. US-A-5 525 955 sowie US-A-5 049 827.

Bei der US-A-5 049 827 liegen an den entgegengesetzten Enden der Widerstandsbahn Versorgungsspannungen in Form von phasenverschobenen Wechselspannungen, genauer gesagt Rechteckspannungsverläufen an. Dadurch, daß diese Wechselspannungen jeweils in ihrer Phase entgegengesetzt gerichtet sind, lassen sich durch geeignete, den Rechteckspannungserzeugern nachgeschaltete Spannungsbegrenzer über dem Widerstandselement jeweils gewünschte Versorgungsspannungs-Verteilungsmuster erzielen. Der Grund hierfür besteht darin, daß durch Kontrolle der Amplitude und der Phase der an das Widerstandselement angelegten Spannung an der Position der über dem Widerstandselement stehenden Potentialmeßsonde die Spannung Null erzeugt werden kann, und zwar je nach Meßvorgang an jedem beliebigen Streckenpunkt des Widerstandselements, wodurch es gelingt, auf den notwendigen, sich mit Positionsverschiebung wenn auch nur geringfügig ändernden Plattenabstand zwischen dem Widerstandselement und der Potentialmeßsonde zurückzuführende Kapazitätsänderungen zu kompensieren und so Verfälschungen des Meßergebnisses zu vermeiden. Tatsächlich würden solche wegabhängigen Abstandsänderungen bei einer kapazitätsbestimmten, also berührungslosen Messung in das Meßergebnis eingehen. Dadurch, daß man diesen, von der beweglichen Platte der Potentialmeßsonde und der gegenüberliegenden Fläche des Widerstandselements gebildeten Kondensator potentialfrei stellt, entfallen entsprechend den Vorstellungen dieser Veröffentlichungen auch auf Abstandsänderungen zurückzuführende Meßfehler.

Ferner gehen aus dem Dokument WO-A-94 11 888 bzw. der inhaltsgleichen US-A-5 525 955 Schaltungen hervor, bei denen der Potentialmeßsonde, die über dem wechselspannungsgespeisten Widerstandselement eine Verschiebung erfährt, eine mit dieser fest verbundene Potentialkoppelsonde zugeordnet ist, die den gleichen Meßweg zurücklegt und auf eine stationäre Koppelelektrode arbeitet.

Das Dokument US-A-4 290 095 betrifft die Möglichkeit, bei einem berührungslos arbeitenden kapazitiven Wegsensor eine mit Masse verbundene Schirmung vorzusehen, die die Widerstandsbahn, die Potentialmeßsonde und eine Auswerteelektrode umgibt.

Bei weiteren kapazitiven Wegmeßgebern, die auf Auswerteschaltungen gar nicht oder nur in Form eines einfachen nachgeschalteten Verstärkers eingehen (DE 34 41 217), liegt eine dicht gedrängte, einen mäander- oder zickzackförmigen Verlauf aufweisende Widerstandsleiterbahn auf einer Substratfläche auf, wobei sich in einem Abstand zu dieser Widerstandsleiterbahn ein verschiebliches Abgriffselement befindet, welches flächenartig als Kreisring ausgebildet ist und auf diese Weise das jeweilige Potential kapazitiv auskoppelt und über eine Verbindungsleitung einem aus einem Voltmeter bestehenden Meßkreis zuführt. Allerdings liegt die Leiterbahn an einer Versorgungsgleichspannung, so daß eine kapazitive Meßwerterfassung nur im Verlauf einer mit einer entsprechend hohen Geschwindigkeit erfolgenden Verschiebung möglich ist und eine stationäre Positionsbestimmung infolge eines dann fehlenden Meßwertes nicht erfolgen kann. Auch hier ergeben sich in gleicher Weise auf Streukapazitäten und Ableitwiderständen zurückzuführende Störgrößen, die nicht beseitigt werden können.

Bekannt ist es schließlich bei einem Galvanometer, den Zeiger des Galvanometers als bewegliches Element mit einem Wechselspannungsanschluß zu verbinden, wobei sich der Zeiger flächig im Abstand über ein Widerstandselement bewegt, so daß an diesem durch kapazitive Einkopplung ein Spannungsabfall entsteht, der als Angabe der Zeigerposition ausgewertet werden kann (US-PS 3 636 449).

Der Erfindung liegt die Aufgabe zugrunde, einen berührungslosen, auf kapazitiver Grundlage arbeitenden Positionssensor und dessen Auswerteschaltung so auszubilden, daß sich eine besonders geringe Störempfindlichkeit bei hoher Meßwertgenauigkeit ergibt.

Vorteile der Erfindung

Die Erfindung löst diese Aufgabe mit den Merkmalen des Anspruchs 1 bzw. des Anspruchs 2 und hat den Vorteil, daß trotz Verwendung weitgehend unkritischer und preisgünstiger Bauteile der Einfluß von Streukapazitäten und Ableitwiderständen bei der berührungslosen, durch kapazitive Kopplung erfolgenden Wegmessung entweder gar nicht auftritt oder jedenfalls auf einem die gewünschte Meßgenauigkeit nicht beeinflussenden Niveau gehalten werden kann.

Die Erfindung benötigt hierzu keine aufwendige Schirmung, da es ihr gelingt, den Einfluß von Streukapazitäten gegen Masse sowie den Eingangswiderstand der Schaltung auszugleichen, und zwar durch eine Regelung der Gesamtverstärkung und/oder der Versorgung der Spannungsverteilerschaltung, bei der es sich bevorzugt um eine übliche Widerstandsbahn handelt, wie sie auch bei Potentiometer-Weggebern Verwendung findet. Diese Regelung erfolgt in Verbindung und im Zusammenhang abgestimmt auf Umschaltungen, die an verschiedenen Stellen der Auswerteschaltungen vorgenommen werden.

So beruht ein erstes bevorzugtes Ausführungsbeispiel der Erfindung darauf, daß durch getaktete Auftrennung von Verbindungsleitungen zwischen der die Widerstandsbahn speisenden Signalquelle und der Widerstandsbahn zwischen zwei Meßphasen unterschieden wird, nämlich einer ersten Phase I, in welcher die dann über der gesamten Länge der Widerstandsbahn - unabhängig von der Position der deren Spannungsverteilungsmuster abtastenden kapazitiven Potentialsonde - anliegende volle Spannung von dieser erfaßt und mit einer Referenzspannung verglichen wird, und einer zweiten Meßphase, in welcher der erfaßte Meßwert ausgewertet werden kann. Dabei erfolgt in der Phase I ein entsprechender Abgleich der Verstärkung des kapazitiv von der Potentialsonde erfaßten Meßwerts und/oder eine Beeinflussung der die Widerstandsbahn mit steuerbarer Amplitude speisenden Signalquelle, so daß in der Meßphase II auftretende Veränderungen, in welcher eine Seite der Widerstandsbahn wieder an der Regelspannung liegt, ausschließlich auf die entsprechende wegabhängige Position der Potentialsonde zurückzuführen sind und sonstige Einflüsse aufgrund von Streukapazitäten oder Ableitwiderständen herausfallen, die nämlich durch die Verstärkungsänderung in der Vergleichsphase I mit der Referenzspannung schon ausgeglichen worden sind. Voraussetzung hierfür ist, daß sich die beteiligten Schaltungskomponenten linear verhalten, was der Fall ist.

Ein solcher Ausgleich des durch Streukapazitäten und Ableitwiderstände hervorgerufenen Störspannungsabfalls durch eine Regelung der Gesamtverstärkung ist auch möglich, wenn an dem mit Masse verbundenen Ende der Widerstandsbahn in der Meßphase am anderen Ende eine gegenphasige Spannung anliegt, so daß auch in diesem Fall ein Spannungsabfall über die Spannungsteilerstrecke stattfindet.

Ferner ist es bei einem weiteren Ausführungsbeispiel möglich, den Spannungsteiler mit einer Wechselspannung so zu speisen, daß abwechselnd an einem Ende eine Wechselspannung angelegt wird, während das andere Ende an Masse liegt. Dadurch erscheint am Ausgang abwechselnd eine Spannung, die dem Spannungsteilerverhältnis bzw. dessen Differenz zu 1 entspricht. Regelt man die Verstärkung dann so, daß die Summe der Referenzspannung entspricht, erhält man zwei gegenläufige Ausgangsspannungen, die dem Spannungsteilerverhältnis, also dem gewünschten Meßwert, und der Referenzspannung entsprechen.

Durch die in den abhängigen Ansprüchen aufgeführten weiteren Maßnahmen sind ebenfalls vorteilhafte Weiterbildungen und Verbesserungen der Erfindung möglich.

Zeichnung

Ausführungsbeispiele der Erfindung sind in der Zeichnung dargestellt und werden nachfolgend näher erläutert.
Es zeigen:

Fig. 1    stark schematisiert als eine mögliche Ausführungsform den mechanisch-konstruktiven Aufbau eines bevorzugten kapazitiven Weggebers mit Meß- und Koppelkondensatoranordnung;

Fig. 2    schematisiert eine Potentialverteilung über einem als Widerstandsbahn ausgebildetem Spannungsverteilungselement, welches von einer Potentialmeßsonde abgetastet wird;

Fig. 3    stellt anschaulich die kapazitive Beziehung der Potentialmeßsonde zur Widerstandsbahn dar;

Fig. 4    zeigt eine Ausführungsform der Erfindung, schematisiert in Form eines Blockschaltbildes, bei welcher der gesamte Arbeitszyklus in eine Vergleichs- und Abgleichphase I und in eine Meßphase II durch entsprechende Spannungssteuerung einer Widerstandsbahn unterteilt ist;

Fig. 5    eine weitere Ausführungsform der Erfindung als Blockschaltbild, bei welcher über im vorgegebenen Zeitraster geschaltete Schalter beiden Enden der Widerstandsbahn entweder die gleiche Spannung oder nur ein Ende an Spannung gelegt wird;

Fig. 6    ein weiteres Ausführungsbeispiel der Erfindung in Form eines Blockschaltbilds, bei welcher die Widerstandsbahn mit phasenverschobener Speisespannung beaufschlagt ist;

Fig. 7    ein zur Schaltung der Fig. 6 gehörendes Spannungs-/Zeitdiagramm;

Fig. 8    eine Ausführungsform der Erfindung in Form eines Blockschaltbildes, bei welcher der Widerstandsbahn gegenläufige Versorgungswechselspannungen zugeführt werden, wobei die

Fig. 9    die beiden sich hierdurch ergebenden unterschiedlichen Kennlinien und deren Summenverlauf angibt; schließlich zeigen die

Fig. 10 und 11    zwei verschiedene Lösungsmöglichkeiten bezüglich einer möglichen Schirmung und Potentialtrennung bestimmter Schaltungskomponenten.

Beschreibung der Ausführungsbeispiele

Der Grundgedanke besteht darin, für einen Positionssensor auf kapazitiver Grundlage eine Auswerteschaltung zur Verfügung zu stellen, die in der Lage ist, die üblicherweise an Kondensatorbereichen und Leitungsstrecken auftretenden Leck- und Fehlerströme zuverlässig auszugleichen und auf diese Weise einem solchen Positionssensor eine bisher nicht mögliche Genauigkeit zu verleihen, so daß sich in Verbindung mit den bekannten Vorteilen eines auf kapazitiver Grundlage arbeitenden Sensors Berührungsfreiheit, Alterungsbeständigkeit u.dgl. eine Neukonzeption von entscheidender technischer Bedeutung ergibt. Die Kompensation erfolgt dadurch, daß die Wechselstromversorgungsspannung am von einer Potentialmeßsonde abgetasteten Spannungsverteilerelement, welches üblicherweise eine Widerstandsbahn ist, umgeschaltet wird, so daß sich neben Meßphasen Vergleichs- und Abgleichsphasen ergeben, die rückwirkend entweder auf die Wechselstromspannungsversorgung des Widerstandselements oder auf Verstärker im Auswertebereich so einwirken, daß der Einfluß der Störgrößen verschwindet.

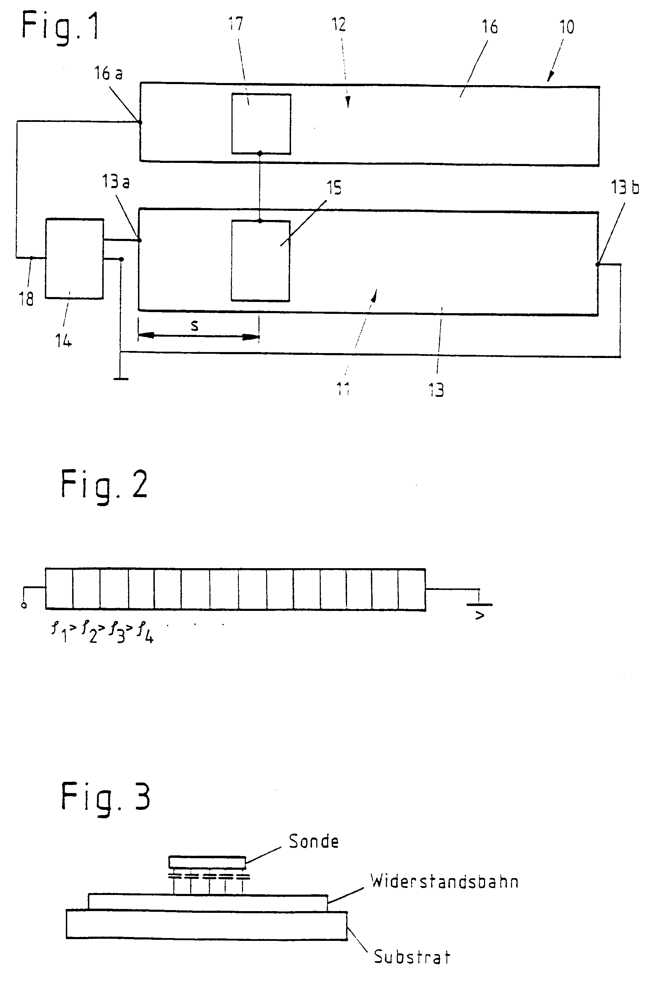

In diesem Zusammenhang sind eine Vielzahl von Ausführungsbeispielen, auf die im folgenden noch eingegangen wird, möglich, wobei der auf kapazitiver Grundlage arbeitende Positionssensor hinsichtlich seines mechanisch-elektrischen Aufbaus bevorzugt so ausgebildet ist, wie dies im folgenden anhand der Darstellung der Fig. 1 zunächst erläutert wird. Diese Erläuterung dient auch einem besseren Verständnis der Erfindung, wobei im übrigen gerade ein solcher Aufbau, wie er in Fig. 1 schematisiert angegeben ist, die angestrebte Störgrößenfreiheit des Sensors nicht unwesentlich fördert und insofern auch den jeweiligen Auswerteschaltungen zu besonderer Wirksamkeit verhilft.

Der in Fig. 1 gezeigte Positionssensor 10 auf kapazitiver Grundlage umfaßt einen Potentialmeßbereich 11 und einen Potentialkoppelbereich 12, wobei bei diesem Ausführungsbeispiel der Potentialmeßbereich ein echtes Spannungsteilerelement 13 mit stetigem Spannungsverlauf ist, beispielsweise und bevorzugt also eine Widerstandsbahn, wie sie üblicherweise bei Meßwertgebern auf potentiometrischer Grundlage (in diesem Falle gleichstromgespeist) oder bei Drehpotentiometern üblich ist.

Den beiden Endanschlüssen 13a, 13b der Widerstandsbahn des Spannungsteilers wird dabei von einer erst bei den folgenden Ausführungsbeispielen im einzelnen erläuterten Speise- und Auswerteschaltung 14 eine Speisewechselspannung konstanter, gegebenenfalls aber auch steuerbarer Amplitude zugeführt, wobei bei dem dargestellten Ausführungsbeispiel einer der Anschlüsse, beispielsweise 13b mit Masse verbunden ist, so daß sich anschaulich erkennen läßt, daß sich über der Widerstandsbahn des Spannungsteilers eine vom Anschlußpunkt 13a zum Anschlußpunkt 13b in ihrer Amplitude abfallende Wechselspannungsverteilung ergibt.

Der Widerstandsbahn des Spannungsteilers 13 ist berührungslos, also im vorgegebenen Abstand eine Potentialmeßsonde 15 zugeordnet, die auf diese Weise mit der Widerstandsbahn in einer kapazitiven Wirkverbindung steht und daher auch in der Lage ist, das sich über dem Weg s (in Meßrichtung) ändernde Wechselspannungspotential über der Widerstandsbahn abzugreifen, wobei die in diesem Fall rechteckplattenförmige Potentialmeßsonde 15 integrierend bzw. mittelwertbildend wirkt und immer eine solche Wechselspannungsamplitude abgreift, wie sich dieser als Mittelwert aus der Position der Potentialmeßsonde ergibt.

Potentialmeßbereich 11 und Potentialkoppelbereich 12 sind elektrisch voneinander in geeigneter Weise isoliert, wobei der Potentialkoppelbereich 12 ebenfalls über einen beweglichen Sondenteil, nämlich eine Potentialkoppelsonde 17 verfügt, die sich in einem vorgegebenen Abstand, also auch hier berührungsfrei über der durchweg elektrisch leitenden Elektrodenfläche 16 des Potentialkoppelbereichs 12 synchron zur Potentialmeßsonde verschiebt. Dabei sind die jeweiligen, in diesem Fall rechteckförmigen Flächen von Potentialmeßsonde und Potentialkoppelsonde mindestens elektrisch, bevorzugt aber auch von ihrem mechanischen Aufbau her miteinander verbunden, bilden also ein gemeinsames Bauelement, beispielsweiseeine Doppelkupferplattenanordnung, die von einer geeigneten, nicht dargestellten Lagerung gemeinsam über den zugeordneten Flächen von Widerstandsbahn bzw. Koppel-Elektrodenfläche in Meßrichtung verschoben wird.

Die jeweiligen Flächen von Potentialmeßsonde 15 und Potentialkoppelsonde 17 bilden mit den jeweiligen Gegenflächen der Widerstandsbahn bzw. der Elektrodenfläche 16 einen Kondensator, die in den nachfolgenden Auswerteschaltungen als Meßkondensator $C_M$ bzw. als Koppelkondensator $C_K$ bezeichnet sind und deren Kapazität über dem Verschiebeweg annähernd unverändert bleibt, so daß Kapazitätsänderungen die Meßwertbildung nicht beeinflussen.

Auf diese Weise überträgt die Potentialkoppelsonde 17 das von der Potentialmeßsonde 15 abgegriffene Wechselspannungs-Amplitudenmeßsignal kapazitiv getreu auf die Elektrodenfläche 16 des Potentialkoppelbereichs 12, wobei lediglich noch ein einziger, sich in seiner Position nicht verändernder Anschluß 16a vorgesehen ist, an welchem das erfaßte Spannungsamplitudensignal auf den Eingang 18 der Speise-/Auswerteschaltung 14 gelangt.

Der physikalisch-theoretische Zusammenhang ist daher so, daß sich auf der "Potentiometer"-Widerstandsbahn entsprechend der Darstellung der Fig. 2 bei Wechselstromspeisung eine Potentialverteilung nach folgender Formel einstellt:

$$\text{Potential } \phi = -\vec{E} \bullet \vec{x}$$

oder als elektrische Feldverteilung ausgedrückt

$$\text{Feld: } \vec{E} = -\text{grad } \phi$$

Dabei ist jeweils, wie auch die Fig. 2 zeigt,

$$\phi1>\phi2>\phi3>\phi4>....$$

Da es sich um eine Wechselspannung handelt, kann das Potential folgendermaßen dargestellt werden:

$$\phi = \phi o \bullet \text{sign}[\sin(\omega \bullet t)]$$

mit

$\phi o$ = Amplitude des Potentials
$\omega$ =Kreisfrequenz $2\pi\nu$
$\nu$ =Frequenz
t=Zeit

Das gesamte System läßt sich als Kondensator auffassen, welcher aus lauter kleinen Kondensatoren zusammengesetzt ist, wie die Darstellung der Fig. 3 im einzelnen angibt.

Die Kondensatorgleichung lautet:

$$C = \varepsilon r \bullet \varepsilon o \bullet A/d$$

mit

C:    Kapazität
$\varepsilon r$:    relative Dielektrizitätskonstante
A:    Fläche des Kondensators
d:    Abstand (der Platten)

Die Kapazität ergibt sich aus

$$C = \sum_{i=1}^{n} Ci = \varepsilon o \cdot \varepsilon r \cdot \sum_{i=1}^{n} \cdot \frac{Ai}{di}$$

Für die Kapazitäten soll gelten:

$$\Delta C1 \overset{!}{=} \Delta Cn$$
$$\Delta C2 \overset{!}{=} \Delta Cn-1$$
$$\Delta C3 \overset{!}{=} \Delta Cn-2$$
$$\cdot \qquad \cdot$$
$$\cdot \qquad \cdot$$
$$\cdot \qquad \cdot$$
$$\cdot \qquad \cdot$$

Das abgegriffene Potential hängt in linearer Beziehung vom Ort x ab. $\rightarrow \phi = \phi(x)$. Über die Teilkapazitäten $\equiv Ci$ fließen Verschiebungsströme $I_i$ in die Sonde, dabei gilt:

$$I_i = Ci \cdot \frac{d\,i(x)}{dt}$$

Für den gesamten Verschiebestrom I gilt dann:

$$I = \sum_{i=1}^{n} Ci \cdot \frac{d\,i(x)}{dt} \quad ,$$

d.h. die einzelnen Spannungsamplituden werden aufaddiert zu einem gesamten Verschiebungsstrom I.

Daher gehen selbst kleinste Verschiebungen der Platte der Potentialmeßsonde in die abgegriffene Wechselspannungsamplitude ein, da sich das Verhältnis der Teilspannungen bei einer Verschiebung um δs natürlich ändert. Die Aufnahme des Meßsignals erfolgt berührungsfrei, desgleichen seine Übertragung auf die stationäre Elektrodenfläche 16, so daß ein solcher Positionssensor keinem mechanischen Verschleiß ausgesetzt ist und schon an dieser Stelle keine variablen Störgrößen wie beispielsweise variable Streukapazitäten auftreten, die beispielsweise schon durch Biegung von Verbindungsleitungen bzw.

Übergangswiderständen bei Schleifkontakten erzeugt werden können.

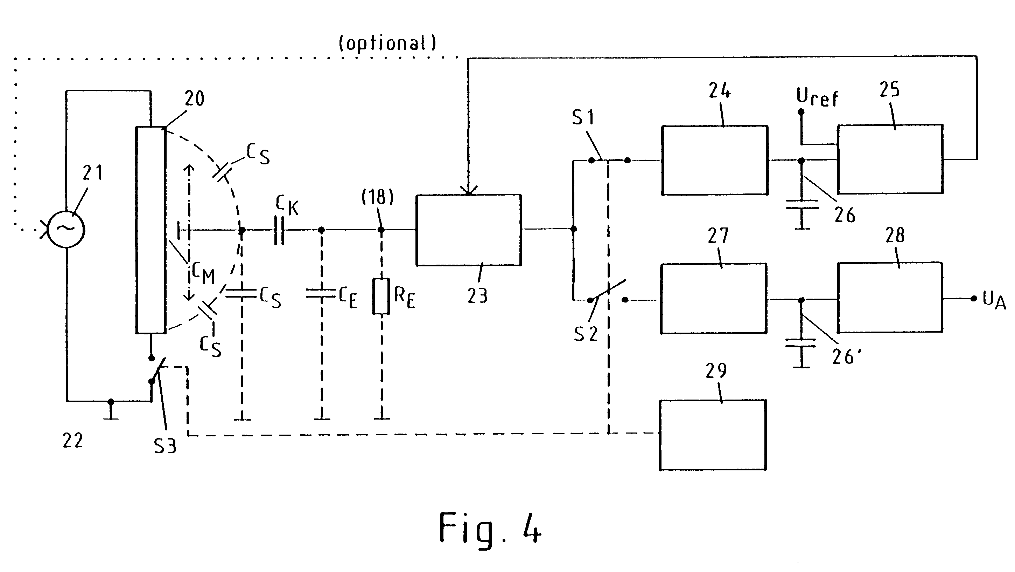

Ein erstes Ausführungsbeispiel einer Auswerteschaltung ist in Fig. 4 dargestellt. Die Widerstandsbahn 20 liegt an einer Speisewechselspannungsquelle 21, die auf einer Seite bei 22 mit Masse verbunden ist. Die Potentialsonde bildet mit dem jeweils zugeordneten Teil der Widerstandsbahn 20 einen ersten Meßkondensator $C_M$, der in Reihe liegt mit dem Koppelkondensator $C_K$, wobei in dem Schaltbild der Fig. 4 noch Streukondensatoren $C_S$ gegen Masse bzw. Widerstandsbahn oder sonstige Zuleitungen eingezeichnet sind, zusammen mit einem Eingangskondensator $C_E$ und einem Eingangswiderstand $R_E$ am Eingang eines Verstärkers 23 mit steuerbarer Verstärkung, die ebenfalls als Störgrößen in Erscheinung treten.

Der Verstärkerausgang liegt parallel über im Gegentakt geschaltete Schalter S1, S2, die natürlich auch elektronische Schalter sein können, an einem ersten Gleichrichter 24, dessen Ausgang mit einem Regler 25 verbunden ist (beispielsweise ein Operationsverstärker), dessen anderem Eingang eine Vergleichsspannung $U_{ref}$ zugeführt ist. Zur Zwischenspeicherung des Gleichrichterausgangssignals ist noch ein Speicherkondensator 26 am Eingang des Reglers 25 vorgesehen.

Der Ausgang des Reglers ist mit dem Verstärker 23 mit steuerbarer Verstärkung verbunden und kann optional (allein oder in Verbindung mit einer Beeinflussung des Verstärkers 23) auch noch auf die Speisewechselspannungsquelle 21 einwirken, so daß diese eine Signalquelle mit steuerbarer Amplitude darstellt.

Ein paralleler Ausgangszweig umfaßt ebenfalls einen Gleichrichter 27 in Reihe mit einem Tiefpaß 28, falls gewünscht, an dessen Ausgang das Meßsignal $(U_A)$ anliegt; die Schalter S1 und S2 sind synchron so mit einem in der Versorgungsleitung zur Widerstandsbahn 20 liegenden Schalter S3 geschaltet, daß sich abwechselnd die in der Fig. 4 dargestellten Schaltzustände ergeben, was bedeutet, daß der Schalter S3 immer offen ist, wenn der Schalter S1 geschlossen ist bzw. umgekehrt; der Schalter S2, der die Meßwert-Aufbereitungselemente mit dem Ausgang des Verstärkers 23 verbindet, ist dann geschlossen, wenn auch an der Widerstandsbahn 20 die Versorgungswechselspannung bei geschlossenem Schalter S3 anliegt, wobei der Schalter S1 geöffnet ist, so daß zu diesem Zeitpunkt bzw. in dieser Arbeitsphase keine Verstärkungsänderungen oder Änderungen in der Amplitude der Versorgungsspannung auftreten.

Die Grundfunktion eines solchen Schaltungsaufbaus, der einer Vielzahl von Varianten zugänglich ist, ist dann so, daß in einer ersten Phase bei geöffnetem Schalter S3, zu welcher auch der Schalter S2 geöffnet und der Schalter S1 geschlossen ist - für die entsprechende Ansteuerung sorgt eine Steuerlogikschaltung 29 -, der Spannungsteiler von der Speisewechselspannungsquelle 21 so gespeist ist, daß beide Enden gleiche Spannung haben, da bei geöffnetem Schalter S3 über die Widerstandsbahn kein Spannungsabfall auftritt, unabhängig davon, an welcher Stelle sich die Potentialmeßsonde befindet. Die Potentialmeßsonde tastet daher an jeder Position die gleiche Spannung ab, die nach Verstärkung am Verstärker 23 und Gleichrichtung am Eingang des Reglers 25, der bevorzugt ein I-Regler ist, mit der Referenzspannung verglichen wird. Der I-Regler 25 regelt dann die Verstärkung des Verstärkers 23 so nach (oder beeinflußt die Amplitude der in diesem Fall steuerbaren Speisewechselspannungsquelle 21 so), daß am Ausgang des Gleichrichters 24 bzw. an dem einen letztlich mit dem Verstärker 23 verbundenen Eingang des I-Reglers 25 eine der Referenzspannung $U_{ref}$ entsprechende Ausgangsspannung erscheint, wohlgemerkt in der Vergleichsphase, in welcher die Ausgangsspannung der Meßsonde von deren Position unabhängig ist. Gleichzeitig ist dieses in der Vergleichsphase von der Potentialmeßsonde erfaßte Signal ein Maß für die Übertragung von der Widerstandsbahn 20 auf die Meßsonde und für das Übertragungsverhältnis überhaupt, welches von dieser Auswerteschaltung realisiert wird. Da es sich aber um ein linear arbeitendes System handelt, gilt dieses Übertragungsverhältnis auch für Teilspannungen, d.h. dann, wenn die Widerstandsbahn 20 effektiv als Spannungsteiler arbeitet.

Dies geschieht in der Meßphase II, in welcher der Schalter S3 geschlossen ist und daher von der Potentialmeßsonde ein ihrer Position entsprechendes Wechselspannungsamplitudensignal abgetastet wird, so daß durch dieses Umschalten und Beeinflussen der Verstärkereigenschaften bzw. der Amplitude der Versorgungsquelle sämtliche auf Störgrößen zurückzuführende Einflüsse eliminiert sind.

In der Meßphase wird das gewonnene Signal bei geschlossenem Schalter S2 vom Gleichrichter 27 gleichgerichtet und gelangt über den Tiefpaß 28 zum Meßausgang, wobei dieses Signal dadurch, daß die Verstärkung so eingestellt worden ist, daß bei voller Spannung ein der Referenzspannung $U_{ref}$ entsprechendes Signal erscheint, nunmehr dem Spannungsteilerverhältnis proportional sei, d.h. der Meßsondenposition entspricht.

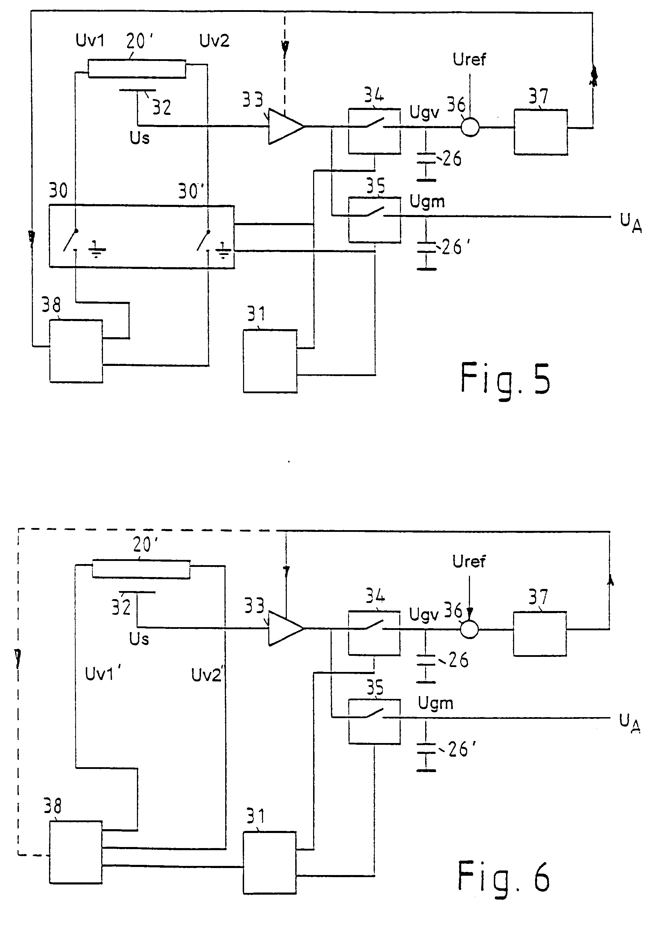

Das anhand der Darstellung der Fig. 4 erläuterte Grundprinzip der Zerlegung des Meßvorgangs in eine Vergleichs- bzw. Abgleichphase und in eine Meßphase ist einer Vielzahl von unterschiedlichen Ausführungsformen Zugänglich, wobei bei dem in Fig. 5 gezeigten Ausführungsbeispiel so vorgegangen wird, daß über Schalter 30, 30' an beiden Anschlußenden der Widerstandsbahn Wechselspannungen Uv1 bzw. Uv2 zugeführt werden, wobei die Schalter 30, 30' von einer Schalter-Ablaufsteuerung 31 so geschaltet werden, daß entweder an beiden Anschlußenden der Widerstandsbahn 20' die gleiche Spannung liegt, also Uv1 = Uv2 ist, so daß kein Spannungsabfall stattfindet, während in der darauffolgenden Meßphase nur an ein Ende der Widerstandsbahn 20' Spannung angelegt wird und das andere Ende durch die Schaltersteuerung an Masse gelegt wird, so daß sich ein Spannungsabfall über der Spannungsteilerstrecke ergibt, oder, was das gleiche ist, an das andere Ende wird eine zur Spannung am einen Ende gegenphasige Spannung angelegt, so daß auch in diesem Fall ein Spannungsabfall über der Spannungsteilerstrecke stattfindet.

In der ersten Vergleichsphase I ohne Spannungsabfall gelangt die Sondenspannung Us, die von der Sonde 32 erfaßt wird, nach Verstärkung am (steuerbaren) Verstärker 33 und Synchrongleichrichtung am Gleichrichter 34 als Gleichspannung Ugv zum Summenpunkt 36, an welchem die Differenz mit der zugeführten Referenzspannung $U_{ref}$ gebildet wird. Diese Differenzgleichspannung wird auf den nachgeschalteten Regler 37 geführt, dessen Ausgang dann entweder, wie weiter vorn schon erwähnt, auf den Eingang zur Verstellung des Verstärkungsfaktors des Verstärkers 33 arbeitet oder - alternativ - die von dem Wechselspannungsgenerator 38 gelieferten Amplituden der Spannungen Uv1 und Uv2 einstellt.

Auch hier gelangt in der Meßphase die der Sondenposition entsprechende Meßausgangsspannung $U_A$ über den Synchrongleichrichter 35 zum Meßausgang. Da die Verstärkung bzw. die Speisespannungen der Potentiometerbahn aus der Vergleichsphase her so eingestellt sind, daß bei voller Spannung einer Referenzspannung entsprechende Signale erscheinen, ist die Ausgangsspannung $U_A$ dem Spannungsverteilerverhältnis und der Referenzspannung proportional.

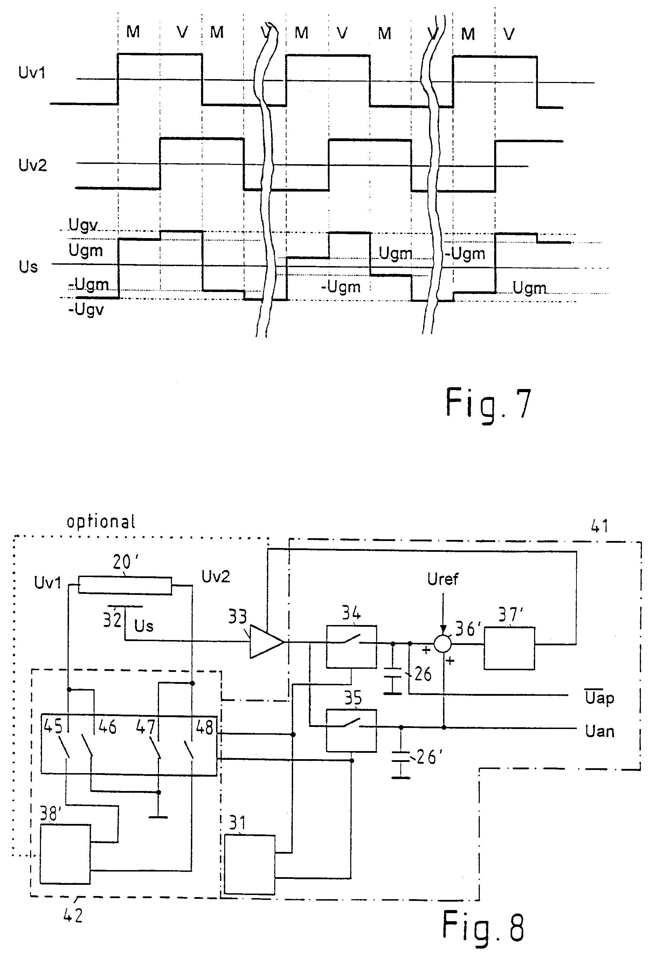

Es ist entsprechend dem Schaltungsaufbau der Fig. 6 auch möglich, mit phasenverschobenen Speisespannungen für die Widerstandsbahn 20' zu arbeiten, wobei sich Spannungsverläufe an den verschiedenen Schaltungspunkten entsprechend dem in Fig. 7 gezeigten Diagramm ergeben. Die einzelnen Schaltungskomponenten tragen in der Darstellung der Fig.6 und den folgenden dann, wenn sie mit den Komponenten der Fig. 5 identisch sind, die gleichen Bezugszeichen; bei geringfügig veränderten Funktionen ergänzt durch einen Beistrich oben.

Durch die Phasenverschiebung der beiden vom Wechselspannungsgenerator 38 erzeugten Speisespannungen Uv1' und Uv2' liegen an der Widerstandsbahn 20' abwechselnd gleich- und gegenphasige Spannungen an, wobei die Spannung Uv2' der Spannung Uv1' um eine viertel Periode nachläuft. Daher sind in den mit V bezeichneten Zeitabschnitten die beiden Versorgungsspannungen entweder in positiver oder negativer Richtung gleich, während sie in den Zeitabschnitten M in Gegenphase liegen. Daher tritt in den "gleichphasigen" Zeitabschnitten V am Spannungsteiler kein Spannungsabfall auf, und in dieser Zeit wird durch den elektronischen Schalter und Gleichrichter 34 die Vergleichsspannung Ugv erzeugt, die der Potentialsondenspannung Us während dieser Zeit entspricht. In den Zeitabschnitten M ergibt sich aufgrund der Gegenphasigkeit der Speisespannungen über der Widerstandsbahn 20' ein Spannungsabfall, der zur Erfassung des "Spannungsteilerverhältnisses", also zur Erfassung der Position der Potentialsonde ausgenutzt wird (Meßphase II). Die Meßwertspannung Ugm wird ebenfalls mit Hilfe des elektronisch gesteuerten Schaltungs- und Gleichrichters 35 erzeugt, wobei die beiden Werte Ugv und Ugm durch entsprechende Speicherschaltungen, die in Form von Kondensatoren 26, 26' realisiert sind, gespeichert werden. Der Diagrammverlauf der Fig. 7 zeigt die Spannungsverläufe für drei verschiedene Potentialsondenstellungen, nämlich nahe am Anschluß für die eine Speisespannung Uv1, etwa in der Mitte der Widerstandsbahn, und eine nahe am Ende der Spannungszuführung für Uv2.

Es versteht sich, daß man ähnliche Verhältnisse erhält, wenn der durch die Widerstandsbahn 20' realisierte Spannungsteiler oder ein entsprechend verwendetes Spannungsverteilungselement mit Rechtecksignalen an seinen beiden Anschlüssen versorgt wird, wobei beispielsweise dem einen Ende eine Rechteckspannung gegebener Frequenz und dem anderen Ende eine Rechteckspannung mit doppelter Frequenz zugeführt werden kann. Auch in diesem Fall ergeben sich gegenphasige und gleichphasige Zeitabschnitte, die als Meßphasen und Referenzphasen ausgewertet werden können.

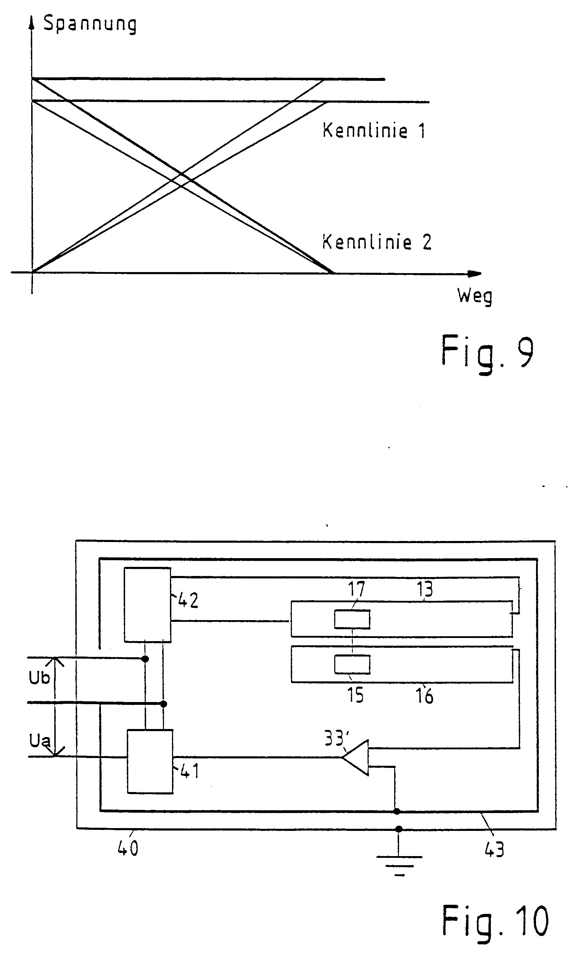

Eine weitere Realisierungsmöglichkeit besteht entsprechend der Darstellung der Fig. 8 darin, der Widerstandsbahn 20' des Spannungsteilerelementes gegenläufige Versorgungswechselspannungen zuzuführen, was mit anderen Worten bedeutet, daß durch Umpolen der Potentiometerbahn eine steigende und eine fallende Kennlinie erzeugt wird entsprechend der Darstellung der Fig. 9. In diesem Fall (siehe Fig. 8) liefert die Wechselspannungsquelle 38' in ihrer Amplitude gleiche Versorgungswechselspannungen Uv1 und Uv2, die über erste elektronische Schalter 45 und 48 jeweils an die Enden der Widerstandsbahn 20' abwechselnd gelegt werden, während das jeweils andere Ende der Widerstandsbahn 20' über die weiteren elektronischen Schalter 46 und 47 mit Masse verbunden wird. Es sind also jeweils abwechselnd die Schalter 45 und 47 in Verbindung mit der gesteuerten Gleichrichterschaltung 35 und in einer nächsten Phase - bei diesem Ausführungsbeispiel wird allerdings nicht zwischen Vergleichs- und Meßphase unterschieden - die Schalter 46 und 48 in Verbindung mit der gesteuerten Gleichrichterschaltung 34 aktiv.

Die Ausgangssignale der beiden synchron mit den Schaltern 45 bis 48 geschalteten Gleichrichter 34 und 35 werden in den Kondensatoren 26 und 26' zwischengespeichert und gelangen über einen Summierer 36' auf die Reglerschaltung 37', die als I-Regler ausgebildet ist und auch hier wieder bevorzugt die Eingangsamplitude der Versorgungsspannungen Uv1, Uv2 zur Widerstandspotentiometerbahn so regelt, daß die ermittelte Summe der beiden Ausgangsspannungen konstant bleibt, d.h. daß entsprechend der Darstellung der Fig. 9 beispielsweise durch Vergleich mit einem konstanten Wert eine höhere Summenspannung eingestellt wird, da die beiden Kennlinienverläufe 1 und 2 in ihrer Summe an jeder Position des Weges einen konstanten Wert aufweisen müssen. Realisiert werden kann dies bei der Ausführungsform der Fig. 8 ebenfalls wieder dadurch, daß ein Vergleich mit einer dem Summierer 36' zugeführten Referenzspannung $U_{ref}$ vorgenommen wird. Der Regler sorgt dann entweder durch Einstellung der Verstärkung des Verstärkers 33 dafür, daß die Summe der beiden Ausgangssignale der Referenzspannung $U_{ref}$ entspricht, oder auch durch entsprechende Nachregelung der Amplitude der Speisespannung für das Potentiometer, was durch die gestrichelte Verbindungslinie vom Ausgang des I-Reglers 37' zum Eingang des Wechselstromgenerators 38' angedeutet ist.

Auch durch eine solche Regelung fällt der Einfluß von auf die Eigenschaften der Koppelkondensatoren zurückzuführenden Störgrößen heraus, wobei als Ausgangsspannung sowohl das Signal der einen als auch der anderen Kennlinie, also Uan bzw. Uap verwendet werden kann.

Bei solchen auf kapazitiver Grundlage arbeitenden Weg-, Winkel- oder Positions-Gebern, beispielsweise Potentiometern hat es sich als wünschenswert herausgestellt, daß die Spannungsquelle, die den Spannungsteiler versorgt, und der Verstärkereingang für die Ausgangsspannung einen definierten Potential-Bezugspunkt haben, da sonst die Messung von dem Potentialverhältnis in der Versorgungsspannung und des Sensorgehäuses abhängig werden kann. Es ist daher anzustreben, die Masse der Versorgungsspannung zumindest für den verwendeten Frequenzbereich mit dem Gehäuse des Sensors zu verbinden, da sonst undefinierte Verhältnisse auftreten können, die Meßfehler nicht ausschließen.

Da es andererseits in elektrischen Anlagen nicht immer möglich ist, das Gehäuse mit der Masse der Versorgungsspannung zu verbinden, schlägt die Erfindung als Ausgestaltungen Möglichkeiten vor, eventuell durch mangelnde Trennung der Potentialverhältnisse auftretende Störungen zu beseitigen.

Eine erste Variante umfaßt entsprechend der Darstellung der Fig. 10 ein isoliertes Schirmgehäuse, wobei das Spannungsteilerelement, die Meßsonde und die Rückführelektrode oder Koppelelektrode von einem Schirm umgeben sind, der als Massepotential dient.

Man erkennt in Fig. 10 schematisiert das Spannungsteilerelement 13 als Potentiometerwiderstandsbahn, die Koppelelektrode 16 mit dem gemeinsamen Bauteil aus Potentialmeßsonde 17 und Potentialkoppelsonde 15, den Verstärker 33' sowie ein Bauteil 41, welches die in Fig. 8 strichpunktierten Bauelemente umfaßt, und ein Bauteil 42, welches die in Fig. 8 gestrichelt umrandeten Bauelemente umfaßt.

Entscheidend ist bei einem solchen Sensor mit isoliertem Schirmgehäuse, daß vom Gehäuse 40 des Sensors keine Kopplung auf die Potentialmeß-/Koppelsonde 17, 15 und auf die Verbindung zum Verstärker 33' erfolgt. Darüber hinaus muß verhindert werden, daß die Wechselspannungen, die an der Widerstandsbahn 13 und den Zuleitungen von der Wechselspannungsquelle 42 anliegen, auf das Gehäuse eingekoppelt werden. Daher ist innerhalb des Gehäuses 40 ein Schirm 43 isoliert angeordnet, der mit dem Bezugspotential, z.B. dem negativen Versorgungsspannungsanschluß verbunden ist. Es ist zweckmäßig, die gesamte Elektronik, mindestens jedoch den Teil, in dem Wechselspannungen auftreten, innerhalb dieses Schirms 43 unterzubringen.

Eine solche Lösung läßt sich elektrisch vergleichsweise einfach realisieren, kann jedoch zu zusätzlichen Kosten wegen des Platzbedarfs und zu konstruktiven Schwierigkeiten insbesondere bei beengten Platzverhältnissen führen.

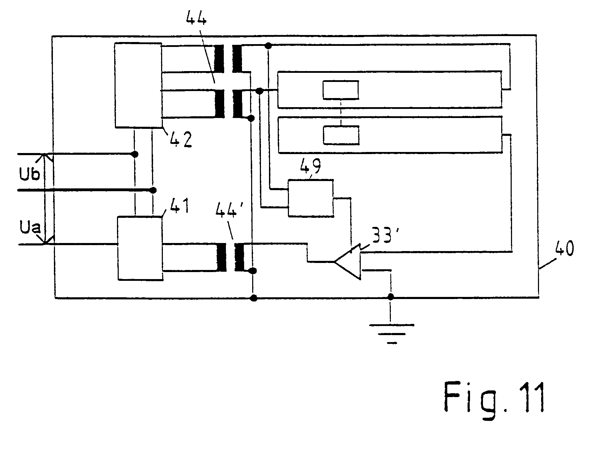

Eine andere Möglichkeit besteht daher entsprechend Fig. 11 darin, eine galvanische Trennung von Spannungsteiler, Vorverstärker und Versorgungsspannung vorzunehmen, indem, bei gleichen Bezugszeichen der jeweiligen Bauelemente wie in Fig. 10, Trenntransformatoren 44, 44' vorgesehen sind, die das Spannungsteilerelement und den Verstärker galvanisch trennen. Dabei ist ferner vorteilhaft, den Spannungsteiler mit Hilfe eines oder mehrerer Transformatoren zu versorgen, so daß sich auf diese Weise auch die Versorgungsspannung für den Verstärker 33' des Sondensignals über den zusätzlichen Block 49 erzeugen läßt.

Bei dieser Lösung kann das Gehäuse des Sensors als Massepotential und Abschirmung verwendet werden, wobei eine solche Ausführung auch hinsichtlich der elektromagnetischen Verträglichkeit vorteilhafter ist, bei entsprechender Vereinfachung der Konstruktion.

Die verschiedenen Gesichtspunkte der Erfindung sind anhand von Blockschaltbildern erörtert worden, wobei es von Bedeutung ist, darauf hinzuweisen, daß es selbstverständlich möglich ist, Teile oder auch größere Schaltungseinheiten mit Hilfe von heute geläufigen üblichen Bauelementen, insbesondere Mikroprozessoren u.dgl. zu realisieren. Die Erfindung ist daher nicht auf die diskreten Schaltstufen bzw. Schaltungsblöcke beschränkt, sondern diese dienen insbesondere dazu, die funktionellen Grundwirkungen der Erfindung zu veranschaulichen und spezielle Funktionsabläufe anschaulich darzustellen. Es versteht sich, daß die einzelnen Bausteine und Blöcke in analoger, digitaler oder auch hybrider Technik aufgebaut sein können oder auch, ganz oder teilweise zusammengefaßt, entsprechende Bereiche von programmgesteuerten digitalen Systemen, beispielsweise also Mikroprozessoren, Mikrorechner, digitale oder analoge Logikschaltungen u.dgl. umfassen können. Die bisher angegebene Beschreibung der Erfindung ist daher lediglich als bevorzugtes Ausführungsbeispiel bezüglich des funktionellen Gesamt- und Zeitablaufs und der durch die jeweiligen besprochenen Blöcke erzielten Wirkungsweise zu werten, wobei es sich versteht, daß an die Stelle der erörterten Bauelemente auch entsprechend andere, gleichwirkende treten können.

Ein weiterer Gesichtspunkt bei vorliegender Erfindung ist die Notwendigkeit, Teile der Schaltung oder die Gesamtfunktion zu überwachen, um zu vermeiden, daß ein unbemerkt gebliebener Ausfall des Sensors größere Schäden verursacht. Es ist daher zweckmäßig, eine übergeordnete Schaltung vorzugeben, die, vorzugsweise in Form eines Mikroprozessors ausgebildet eine Vielzahl von Eingängen aufweist, die mit unterschiedlichen Schaltungspunkten der jeweils besprochenen Ausführungsbeispiele in den Figuren verbunden sein kann und die eine Alarmgabe oder Sonstige Maßnahmen dann veranlaßt, wenn bestimmte Werte vorgegebene Grenzwerte über- oder unterschreiten.

Als Ausfälle sind neben der Elektronik noch Leitungsbruch der Zuleitung zum Sensor, Kurzschluß der Sensoranschlüsse, Kurzschluß der Meßelektrode und der Ausgangsspannung zu betrachten.

Neben der Überwachung der Ausgangsspannung auf Einhaltung eines plausiblen Bereichs läßt sich noch durch weitere Schaltungsmaßnahmen eine aktive Überprüfung der Funktionsfähigkeit erreichen, nämlich:

- Überwachung der Kreisverstärkung für die Nachregelung der Vergleichsspannung;
- ferner muß für eine ordnungsgemäße Funktion des Sensors ein minimales und maximales Ausgangssignal einer Meßsonde erscheinen, so daß eine Überwachung der Regelspannung (bei Ausführung mit regelbarem Verstärker) bzw. Versorgungsspannung für den Spannungsteiler vorgenommen werden kann;
- Überwachung des Referenzvergleichs, wobei durch Steuereingänge die Gleichrichtung beispielsweise so verändert werden kann, daß am Ausgang bei ordnungsgemäßer Funktion die Referenzspannung erscheint;
- Überwachung des Bezugspotentials, wobei die Gleichrichtung so gesteuert werden kann, daß am Ausgang annähernd das Bezugspotential erscheint;
- Überwachung auf gegenläufige Ausgangsspannung; auch hier kann die Gleichrichtung so gesteuert werden, daß die Ausgangsspannung einen Wert annimmt, als wären die beiden Anschlüsse des Spannungsteilers vertauscht.

Alle diese Maßnahmen können, wie schon erwähnt, mit Hilfe von eine entsprechende Programmierung aufweisenden Mikroprozessoren oder Kleinrechnern kostengünstig realisiert werden.

**Patentansprüche**

1.  Verfahren zur Bestimmung der jeweiligen örtlichen Position, des Verschiebewegs oder des Winkels eines Körpers durch kapazitive Abtastung, wobei eine mit einem Spannungsteilerelement (13) in kapazitiver Wirkverbindung stehende Potentialmeßsonde (15) längs einer vorgegebenen Meßrichtung, entlang welcher sich eine das Spannungsteilerelement (13) speisende Wechselspannungspotentialverteilung ändert, geführt und das abgetastete Potential ausgewertet wird, dadurch gekennzeichnet, daß das Spannungsteilerelement (13) in einer ersten Vergleichsphase (I) mit einer Wechselspannung so gespeist wird, daß zunächst beide Enden des Spannungsteilerelements (13) gleiche Spannung ohne Auftreten eines Spannungsabfalls über dem Spannungsteilerelement (13) aufweisen, und daß anschließend in einer Meßphase (II) zur Erzielung einer Potentialdifferenz über dem Spannungsteilerelement (13) an ein Ende des Spannungsteilerelements die Wechselspannung angelegt wird und das andere an Masse liegt oder an beiden Enden gegenphasige Spannungen angelegt werden, wobei in der Vergleichsphase (I) die von der Potentialmeßsonde (15) erfaßte Spannung mit einer Referenzspannung ($U_{ref}$) verglichen und durch Verstärkungsregelung bzw. Veränderung der Versorgungsspannung des Spannungsteilerelements nachgeführt wird, so daß in der Meßphase (II) die positionsabhängige Potentialsondenspannung störgrößenfrei erfaßt ist.

2.  Verfahren zur Bestimmung der jeweiligen örtlichen Position, des Verschiebewegs oder des Winkels eines Körpers durch kapazitive Abtastung, wobei eine mit einem Spannungsteilerelement (13) in kapazitiver Wirkverbindung stehende Potentialmeßsonde (15) längs einer vorgegebenen Meßrichtung, entlang welcher sich eine das Spannungsteilerelement (13) speisende Wechselspannungspotentialverteilung ändert, geführt und das abgetastete Potential ausgewertet wird, dadurch gekennzeichnet, daß das Spannungsteilerelement (13) mit einer Wechselspannung so gespeist wird, daß abwechseln an einem Ende des Spannungsteilerelements (13) eine Wechselspannung angelegt wird, während das andere Ende an Masse liegt, und umgekehrt, und daß die Summe der von der Potentionalmeßsonde (15) erfaßten gegenläufigen Spannungen durch Verstärkungsregelung oder Veränderung der Versorgungsspannung des Spannungsteilerelements so geregelt wird, daß sie einer Referenzspannung ($U_{ref}$) entspricht, derart, daß jede der gegenläufigen Ausgangsspannungen für sich gesehen das Spannungsteilerverhältnis angibt.

3.  Verfahren nach Anspruch 1 oder 2, dadurch gekennzeichnet, daß die Potentialmeßsonde (15) mit einer Potentialkoppelsonde (17) körperlich einstückig und somit elektrisch und mechanisch verbunden ist, wobei beide Sonden den gleichen Meßweg zurücklegen und die Potentialkoppelsonde (17) ebenfalls kapazitiv auf eine stationäre Koppelelektrode (16) arbeitet, an welcher die Meßgröße anfällt.

4.  Vorrichtung zur Bestimmung der jeweiligen örtlichen Position, des Verschiebewegs oder des Winkels eines Körpers durch kapazitive Abtastung, zur Durchführung des Verfahrens nach Anspruch 1 oder 2, mit einem Spannungsteilerelement (13) und einer Wechselspannungsquelle (21 ,38) zur Erzeugung einer Wechselspannungspotentialverteilung über dem Spannungsteilerelement, wobei das Spannungsteilerelement in kapazitiver Wirkverbindung mit einer Potentialmesssonde (15), die über dem Spannungsteilerelement geführt ist, steht, ferner mit Schaltungsmitteln (53; 30, 30', 38; 45, 46, 47, 48), die so ausgebildet sind, daß für einen gegebenen Meßvorgang der Potentialmesssonde (15) das Spannungsverteilungsmuster auf dem Spannungsteilerelement (13) in zeitlicher Abfolge mindestens zwei unterschiedliche Verteilungsstrukturen aufweist, die beide von der Potentialmesssonde (15) kapazitiv erfassbar sind, ferner Mitteln zum Vergleich mindestens einer der Verteilungsstrukturen mit einer Referenzspannung ($U_{ref}$) sowie mit Mitteln zur Verstellung der Gesamtverstärkung oder zur Änderung der Versorgungsspannung(en) des Spannungsteilerelements (13) auf der Basis des Vergleichsergebnisses.

5.  Vorrichtung nach Anspruch 4, dadurch gekennzeichnet, daß das Spannungsteilerelement (13) eine Widerstandsbahn (20, 20') ist.

6.  Vorrichtung nach Anspruch 4, dadurch gekennzeichnet, daß die die Zuführung der Versorgungsspannung(en) zum Spannungsteilerelement (13) steuernden Schaltungsmittel (S3; 30, 30') so ausgebildet sind, daß in einer ersten Vergleichsphase (I) über dem Spannungsteilerelement (13) kein Spannungsabfall auftritt durch einseitiges Öffnen der Zuleitungen zu diesen oder durch Zuführen gleicher Spannungen an beiden Spannungsteilerenden, und daß zu einem zweiten zeitlich späteren Zeitpunkt des gleichen Meßvorganges die Anschaltung der Spannungsteileranschlüsse (13a, 13b) an die Wechselspannungsquelle (21, 38) so erfolgt, daß sich ein Spannungsabfall über der Strecke des Spannungsteilerelements ergibt.

**7.** Vorrichtung nach Anspruch 4, dadurch gekennzeichnet, daß die Wechselspannungsquelle (38) so angesteuert ist, daß den Anschlüssen des Spannungsteilerelements derart phasenverschobene Wechselspannungen (Uv1, Uv2) zugeführt sind, daß sich mindestens zu bestimmten Zeitabschnitten (V) spannungsabfallfreie Zustände über dem Spannungsteilerelement (13) ergeben.

**8.** Vorrichtung nach Anspruch 6 oder 7, dadurch gekennzeichnet, daß die von der Potentialmeßsonde (15) während der spannungsabfallfreien Zeitabschnitte unabhängig von ihrer jeweiligen Position erfaßte Sondenspannung nach Verstärkung mit einer Referenzspannung ($U_{ref}$) verglichen und die Gesamtverstärkung und/oder die von der Wechselspannungsquelle (21, 38) erzeugten Wechselspannungen (Uv1, Uv2) nachgeregelt werden.

**9.** Vorrichtung nach Anspruch 4, dadurch gekennzeichnet, daß bei abwechselndem Anlegen einer Wechselspannung jeweils an unterschiedliche Anschlüsse des Spannungsteilerelements (13) im Sinne eines Umpolens einem Verstärker (33) nach zeitsynchroner Gleichrichtung der erfaßten steigenden und fallenden Kennlinien ein Summierglied (36') nachgeschaltet ist, welches einen Regler derart ansteuert, daß dieser die Eingangsamplitude der alternativ angelegten Wechselspannung bzw. die Verstärkung des Verstärkers (33) so nachführt, daß die unabhängig von der Sondenposition ermittelte Summe aus steigender oder fallender Kennlinie konstant bleibt.

**10.** Vorrichtung nach einem der Ansprüche 4 bis 9, dadurch gekennzeichnet, daß mindestens das Spannungsteilerelement (13), die Potentialmeßsonde (15) und eine Potentialkoppelsonde (17) von einer Schirmung (43) umgeben ist, die als Massepotential dient.

**11.** Vorrichtung nach einem der Ansprüche 4 bis 10, dadurch gekennzeichnet, daß Spannungsteilerelement (13), Verstärker und Versorgungsspannungserzeugung galvanisch getrennt sind.

**12.** Vorrichtung nach einem der Ansprüche 4 bis 11, dadurch gekennzeichnet, daß eine Überwachungsschaltung vorgesehen und so ausgebildet ist, daß mindestens eine der Größen Ausgangsspannung, Kreisverstärkung, Referenzvergleich, Bezugspotential, gegenläufige Ausgangsspannungen und Ausgangsspannung des Reglers auf Plausibilität innerhalb minimaler und maximaler Grenzen überwacht werden.

**Claims**

**1.** A method for determining the current position, displacement or angle of a body by capacitive sensing, in which method a potential-measuring probe (15) in capacitive operative connection with a voltage divider element (13) is guided in a preset measuring direction, in which an alternating voltage potential distribution which feeds the voltage divider element (13) changes, and the sensed potential is evaluated, characterized in that the voltage divider element (13) is fad, in a first comparison phase (I), with an alternating voltage such that at first both ends of the voltage divider element (13) have the same voltage without the occurrence of a voltage drop over the voltage divider element (13), and in that subsequently, in a measuring phase (II), for obtaining a potential difference over the voltage divider element (13), the alternating voltage is applied to one end of the voltage divider element and the other end is connected to earth or voltages in phase opposition are applied at both ends, it being the case that in the comparison phase (I) the voltage detected by the potential-measuring probe (15) is compared with a reference voltage ($U_{ref}$) and adjusted by gain control or alteration of the supply voltage of the voltage divider element, so that in the measuring phase (II) the position-dependent potential-probe voltage is detected in a manner free from disturbing quantities.

**2.** A method for determining the current position, displacement or angle of a body by capacitive sensing, in which method a potential-measuring probe (15) in capacitive operative connection with a voltage divider element (13) is guided in a preset measuring direction, in which an alternating voltage potential distribution which feeds the voltage divider element (13) changes, and the sensed potential is evaluated, characterized in that the voltage divider element (13) is fed with an alternating voltage such that an alternating voltage is applied alternately at one end of the voltage divider element (13), while the other end is connected to earth, and vice versa, and in that the sum of the opposed voltages detected by the potential-measuring probe (15) is adjusted by gain control or alteration of the supply voltage of the voltage divider element such that it corresponds to a reference voltage ($U_{ref}$), so that each of the opposed output voltages taken on its own indicates the voltage divider ratio.

**3.** A method according to Claim 1 or 2, characterized in that the potential-measuring probe (15) is connected physically in one piece, and thus electrically and mechanically, to a potential-coupling probe (17), both probes covering the same measuring distance and the potential-coupling probe (17) likewise operating capacitively on a stationary coupling electrode (16), at which the measured quantity is produced.

4. Apparatus for determining the current position, displacement or angle of a body by capacitive sensing, for carrying out the method according to Claim 1 or 2, having a voltage divider element (13) and an alternating voltage source (21, 38) for generating an alternating voltage potential distribution over the voltage divider element, the voltage divider element being in capacitive operative connection with a potential-measuring probe (15) guided over the voltage divider element, and further having circuit means (S3; 30, 30', 38; 45, 46, 47, 48) which are designed such that for a given measuring operation of the potential-measuring probe (15) the voltage distribution pattern on the voltage divider element (13) has, in succession with regard to time, at least two different distribution structures which are both capacitively detectable by the potential-measuring probe (15), and further having means for comparing at least one of the distribution structures with a reference voltage ($U_{ref}$) and also having means for adjusting the overall gain or for changing the supply voltage(s) of the voltage divider element (13) based on the result of the comparison.

5. Apparatus according to Claim 4, characterized in that the voltage divider element (13) is a resistance track (20, 20').

6. Apparatus according to Claim 4, characterized in that the circuit means (S3; 30, 30') controlling the supply of the supply voltage(s) to the voltage divider element (13) are designed such that in a first comparison phase (I) no voltage drop occurs over the voltage divider element (13) owing to unilateral opening of the supply lines thereto or owing to equal voltages being supplied at both voltage divider ends, and in that at a second later point in time of the same measuring operation the voltage divider connections (13a, 13b) are connected to the alternating voltage source (21, 38) such that a voltage drop results over the distance of the voltage divider element.

7. Apparatus according to claim 4, characterized in that the alternating voltage source (38) is controlled such that phase-shifted alternating voltages (Uv1, Uv2) are supplied to the connections of the voltage divider element so that, at least at specified time segments (V), states free from voltage drops result over the voltage divider element (13).

8. Apparatus according to Claim 6 or 7, characterized in that the probe voltage detected, independently of its current position, by the potential-measuring probe (15) during the time segments free from voltage drops is compared, after amplification, with a reference voltage ($U_{ref}$) and the overall gain and/or the alternating voltages (Uv1, Uv2) generated by the alternating voltage source (21, 38) are adjusted.

9. Apparatus according to Claim 4, characterized in that, if an alternating voltage is applied alternately to in each case different connections of the voltage divider element (13), for the purpose of a pole reversal, a summing element (36') is connected downstream of an amplifier (33) after time-synchronous rectification of the detected rising and falling characteristics, which summing element controls a controller so that the latter adjusts the input amplitude of the alternately applied alternating voltage or the gain of the amplifier (33) such that the sum, determined independently of the probe position, of the rising and falling characteristic remains constant.

10. Apparatus according to one of Claims 4 to 9, characterized in that at least the voltage divider element (13), the potential-measuring probe (15) and a potential-coupling probe (17) are surrounded by shielding (43) which serves as earth potential.

11. Apparatus according to one of Claims 4 to 10, characterized in that the voltage divider element (13), amplifier and supply voltage generation are electrically isolated.

12. Apparatus according to one of Claims 4 to 11, characterized in that a monitoring circuit is provided and designed such that at least one of the quantities output voltage, loop gain, reference comparison, reference potential, opposed output voltages and output voltage of the controller are monitored for plausibility within minimal and maximal limits.

**Revendications**

1. Procédé pour déterminer la position réelle, la course ou l'angle d'un objet par balayage capacitif, selon lequel, on guide une sonde de mesure de potentiel (15) coopérant de manière capacitive avec un élément de répartition de tension (13) suivant une direction de mesure prédéterminée, le long de laquelle une répartition de potentiel de tension alternative alimentant l'élément de répartition de tension (13) varie, et on exploite le potentiel détecté, caractérisé en ce que

• l'élément répartiteur de tension (13) est alimenté au cours d'une première phase de comparaison (I) avec une tension alternative pour que tout d'abord les deux extrémités de l'élément répartiteur de tension (13) soit à la même tension sans production de chute de tension à travers l'élément répartiteur de tension (13) et,

- ensuite dans une phase de mesure (II), pour obtenir une différence de potentiel on applique par l'élément répartiteur de tension (13) à une extrémité de cet élément, la tension alternative et l'autre extrémité est mise à la masse ou encore aux deux extrémités on applique des tensions en opposition de phase,

- et dans la phase de comparaison (I), on compare la tension détectée par la sonde de mesure de potentiel (15) à une tension de référence ($U_{ref}$) et par une régulation par amplification ou variation de la tension d'alimentation appliquée à l'élément répartiteur de tension, on assure l'asservissement pour que dans la phase de mesure (II), on détecte sans grandeur perturbatrice, la tension sur la sonde de potentiel qui dépend de la position.

2. Procédé pour déterminer la position réelle, la course ou l'angle d'un objet par balayage capacitif, selon lequel, on guide une sonde de mesure de potentiel (15) coopérant de manière capacitive avec un élément de répartition de tension (13) suivant une direction de mesure prédéterminée, le long de laquelle une répartition de potentiel de tension alternative alimentant l'élément de répartition de tension (13) varie, et on exploite le potentiel détecté, caractérisé en ce que

- on alimente avec une tension alternative l'élément répartiteur de tension (13),

- en alternance, à une extrémité de l'élément répartiteur de tension (13), on applique une tension alternative et à l'autre extrémité, on relie à la masse et inversement et,

- on régule la somme des tensions opposées détectées par la sonde de mesure de potentiel (15) par régulation par amplification ou variation de la tension d'alimentation de l'élément répartiteur de tension en régulant pour qu'elle corresponde à une tension de référence ($U_{ref}$) de façon que chacune des tensions de sortie opposées indique en soi le rapport de répartition de tension.

3. Procédé selon la revendication 1 ou 2, caractérisé en ce que

- la sonde de mesure de potentiel (15) fait corps avec une sonde de couplage de potentiel (17) et lui est ainsi reliée électriquement et mécaniquement,

- les deux sondes parcourent le même chemin de mesure et la sonde de couplage de potentiel (17) fonctionne également de manière capacitive avec une électrode de couplage (16), stationnaire sur laquelle on recueille la grandeur de mesure.

4. Dispositif pour déterminer la position réelle, la course de déplacement et l'angle d'un objet par balayage capacitif, pour la mise en oeuvre du procédé selon la revendication 1 ou 2, comprenant :

- un élément répartiteur de tension (13) et une source de tension alternative (21, 38) pour générer une répartition de potentiel de tension alternative par l'élément répartiteur de tension,

- l'élément répartiteur de tension coopérant de manière capacitive avec une sonde de mesure de potentiel (15) conduite par l'intermédiaire de l'élément répartiteur de tension,

- ainsi que des moyens de commutation (S3 ; 30, 30', 38 ; 45, 46, 47, 48) réalisés pour que pour une opération de mesure prédéterminée de la sonde de potentiel de mesure (15), le modèle de répartition de tension sur l'élément répartiteur de tension (13) présente au moins deux structures de répartition différentes dans une succession chronologique, qui toutes les deux peuvent être détectées de manière capacitive par la sonde de mesure de potentiel (15),

- et des moyens pour comparer au moins l'une des structures de répartition à une tension de référence ($U_{ref}$) ainsi que des moyens pour régler l'amplification globale ou pour modifier la ou les tensions d'alimentation de l'élément répartiteur de tension (13) en fonction du résultat de la comparaison.

5. Dispositif selon la revendication 4, caractérisé en ce que l'élément répartiteur de tension (13) est un chemin résistant (20, 20').

6. Dispositif selon la revendication 4, caractérisé en ce que

- les moyens de commutation (S3, 30, 30') qui commandent l'application des tensions d'alimentation vers l'élément répartiteur de tension (13) sont réalisés pour que dans une première phase de comparaison (I), il n'y a pas de chute de tension sur l'élément répartiteur de tension (13) par l'ouverture d'un côté des lignes d'alimentation vers celui-ci ou par l'application de tensions égales aux deux extrémités du répartiteur de tension et,

- en un second instant, ultérieur de la même opération de mesure, le branchement des raccords du répartiteur de tension (13a, 13b) à la source de tension alternative (21, 38) se fait pour avoir une chute de tension sur le chemin de l'élément répartiteur de tension.

**7.** Dispositif selon la revendication 4, caractérisé en ce que
la source de tension alternative (38) est commandée pour appliquer au branchement de l'élément répartiteur de tension, des tensions alternatives (Uv1, Uv2) déphasées pour qu'au moins à un des instants déterminés V, on obtienne des états sans chute de tension sur l'élément répartiteur de tension (13).

**8.** Dispositif selon la revendication 6 ou 7, caractérisé en ce que

- on compare après amplification, la tension de sonde détectée par la sonde de mesure de potentiel (15) pendant la période sans chute de tension, indépendamment de la position de la sonde, à une tension de référence ($U_{ref}$) et,
- on régule l'amplification totale et/ou la tension alternative (Uv1, Uv2) générée par la source de tension alternative (21, 38).

**9.** Dispositif selon la revendication 4, caractérisé en ce qu'
en appliquant de manière alternée une tension alternative chaque fois à des bornes différentes de l'élément répartiteur de tension (13) dans le sens d'un changement de polarité d'un amplificateur (33), après redressement synchrone des caractéristiques montantes et descendantes, détectées, on a en aval un élément additionneur (36') qui commande un régulateur pour que celui-ci asservisse l'amplitude d'entrée de la tension alternative appliquée de façon alternée ou l'amplification de l'amplificateur (33) pour maintenir constante la somme des caractéristiques croissantes et décroissantes, obtenue, et cela indépendamment de la position de la sonde.

**10.** Dispositif selon l'une des revendications 4 à 9, caractérisé en ce qu'
au moins l'élément répartiteur de tension (13), la sonde de mesure de potentiel (15) et une sonde de couplage de potentiel (17) sont entourés par un blindage (43) servant de potentiel de masse.

**11.** Dispositif selon l'une des revendications 4 à 10, caractérisé en ce que
l'élément répartiteur de tension (13), l'amplificateur et le générateur de tension d'alimentation sont séparés de manière galvanique.

**12.** Dispositif selon l'une des revendications 4 à 11, caractérisé par
un circuit de surveillance réalisé pour qu'au moins l'une des grandeurs : tension de sortie, amplification circulaire, comparaison de référence, potentiel de référence, tensions de sortie opposées et tension de sortie du régulateur sont contrôlés en plausibilité à l'intérieur de limites minimales et maximales.

**14**

# Fig.1

s

# Fig. 2

$f_1 > f_2 > f_3 > f_4$ · · ·

# Fig. 3

Sonde

Widerstandsbahn

Substrat

(optional)

Fig. 4

EP 0 711 978 B1

Fig. 5

Fig. 6

Fig. 7

Fig. 8

Spannung

Kennlinie 1

Kennlinie 2

Weg

Fig. 9

Ub

Ua

42

17    13

15    16

33'

41

40    43

Fig. 10

Fig. 11